# EUROPÄISCHE PATENTSCHRIFT

(11) **EP 1 321 700 B1**
(45) Veröffentlichungstag und Bekanntmachung des Hinweises auf die Patenterteilung: **07.06.2006**
(21) Anmeldenummer: 02022005.9
(22) Anmeldetag: 01.10.2002
(51) Int. Cl.: F16K 41/04, F16K 11/044

(54) **Ventil für flüssige Medien**
Valve for fluids
Soupape pour fluides

(30) Priorität: 19.12.2001 DE 10162305
(43) Veröffentlichungstag der Anmeldung: 25.06.2003
(73) Patentinhaber: Honeywell Technologies Sarl, 1110 Morges (CH)
(72) Erfinder: Sanders, Bernhard, 59755 Arnsberg (DE)
(74) Vertreter: Graefe, Jörg

(56) Entgegenhaltungen:
- EP-A- 0 241 952
- EP-A- 0 308 390
- EP-A- 0 679 821
- EP-A- 0 907 046
- FR-A- 2 143 464
- GB-A- 1 504 399
- GB-A- 2 320 311
- US-A- 3 635 247

## Beschreibung

Die vorliegende Erfindung betrifft ein Ventil für flüssige Medien mit einer über einen Antrieb betätigbaren in axialer Richtung in mindestens einer Führung beweglich geführten Ventilspindel, wie es im Oberbegriff des Anspruchs 1 näher angegeben ist.

Ventile der vorgenannten Art werden beispielsweise in Heizungs-Warmwasser- und Kühlkreisläufen verwendet in verschiedenen Funktionen. Dabei kann es sich z. B. um Zwei-Wege-Ventile oder Drei-Wege-Ventile handeln. Bei manchen Anwendungen werden derartige Ventile recht häufig geschaltet, beispielsweise 50 bis 100 mal am Tag. Durch gewisse abrasive Effekte unterliegen solche Ventile einem Verschleiß, da im Laufe von Jahren eine hohe Anzahl von Verstellvorgängen der axial beweglich geführten Ventilspindel anfallen. Erfahrungsgemäß ist ein solches Ventil nach einer großen Anzahl von Arbeitszyklen funktionsunfähig, wobei sich in der Regel die Ventilspindel festsetzt. In Wasserkreisläufen von Heizungsanlagen können feinste Feststoffpartikel auftreten, beispielsweise Magnetit-Partikel, die den Abnutzungseffekt bei häufiger Betätigung der Ventilspindel verschärfen.

Ventile der eingangs genannten Art sind in den Druckschriften mit den Veröffentlichungsnummern EP 0 308 380 A1, FR 2 143 464 und EP 0 241 952 A1 offenbart. Die dort offenbarten Ventile weisen zum Teil die im Oberbegriff genannten Behältnisse für die Fettkammer auf, die bei einer großen Abnutzung auch ausgetauscht werden können, der Aufbau und die Anordnung der Behältnisse in dem Einsatzteil ist jedoch nicht immer vorteilhaft und insbesondere montagefreundlich.

Aufgabe der vorliegenden Erfindung ist es, ein Ventil für flüssige Medien der eingangs genannten Gattung zu schaffen, welches eine höhere Montagefreundlichkeit aufweist.

Die Lösung dieser Aufgabe liefert ein erfindungsgemäßes Ventil für flüssige Medien der eingangs genannten Gattung mit den kennzeichnenden Merkmalen des Hauptanspruchs.

Das erfindungsgemäße Behältnis, welches das Schmiermittel enthält, wird erfindungsgemäß über konzentrisch auf der Ventilspindel angeordnete O-Ringe abgedichtet. Vorzugsweise schließen sich an das Behältnis mit dem Schmiermittel in axialer Richtung zu beiden Seiten hin O-Ringe an. Diese am Umfang der Ventilspindel abdichtenden O-Ringe wirken beim axialen Hub der Ventilspindel quasi als Fettabstreifer und werden dabei selbst gefettet und so geschmeidig gehalten. Vorzugsweise ist bei Verwendung von zwei solchen O-Ringen der axiale Abstand der O-Ringe etwa gleich dem maximalen Hub der Ventilspindel. Das als Schmiermittel verwendete Fett bleibt in der Kammer bzw. in dem in die Kammer eingesetzten Behältnis.

Dadurch, dass das Schmiermittel im Führungsbereich der Ventilspindel vorzugsweise an der Seite des Ventils angeordnet ist, die dem das Ventil durchfließenden Medium abgewandt ist, ist die Spindelführung quasi auf der trockenen Seite des Ventils angeordnet. Dadurch kann man eine engere Spindelführung verwenden, denn es besteht nicht die Gefahr, dass in dem Medium mitgerissene Kleinstpartikel sich am Umfang der Ventilspindel ablagern.

Die Bohrung der eingepressten Scheibe kann für den Durchgang der Ventilspindel größer sein als der Durchmesser der Ventilspindel, wodurch sich zwischen der Bohrung und der Ventilspindel ein radialer Abstand ergibt. Wenn Partikel mit dem das Ventil durchfließenden Medium in den Bereich der Bohrung gelangen, können sie sich dort nicht festsetzen, da sie herausgespült werden. Der radiale Abstand zwischen Bohrung und

Ventilspindel ist vorzugsweise größer als der Durchmesser der größten auftretenden Partikel, um ein Festsetzen solcher Partikel in dem die Bohrung der Scheibe durchsetzenden Bereich der Ventilspindel zu vermeiden. Auf diese Weise verhindert man eine Abnutzung am Schaft der Ventilspindel oder gar ein Festsetzen der Ventilspindel und ermöglicht eine wesentlich längere Lebensdauer mit einer viel größeren Anzahl von Hubbewegungen der Ventilspindel gegenüber herkömmlichen Ventilen dieser Art.

Ein Ventil der oben geschilderten erfindungsgemäßen Art kann beispielsweise als ein Drei-Wege-Ventil in dem Rohrleitungssystem einer Heizungs- und/oder Warmwasseranlage als Mischventil oder als Verteilventil eingesetzt werden. Ein solches Verteilventil kann beispielsweise einen Ventileingang und zwei Ventilausgänge haben. Als Mischventil können zwei Ventileingänge und ein Ventilausgang vorhanden sein.

Bei Ausführung eines erfindungsgemäßen Ventils als Drei-Wege-Ventil kann dieses am vorderen Ende der Ventilspindel einen Abdichtkörper aufweisen, der bei axialem Hub wahlweise gegen einen ersten Ventilsitz oder gegen einen zweiten axial davon beabstandeten Ventilsitz geführt wird, wobei sich beide Ventilsitze gegenüber liegen. Die Ventilsitze können in einem Ventileinsatz oder in einem Gehäusekörper eines Ventils gebildet sein. Das erfindungsgemäße Ventil kann auch ein Zwei-Wege-Ventil sein mit nur einem Eingangsstutzen und einem Ausgangsstutzen und nur einem Ventilsitz.

Gemäß einer möglichen bevorzugten Variante der Erfindung ist vorgesehen, dass der Abdichtkörper am vorderen Ende der Ventilspindel in dem Fall, bei dem die Ventilspindel wahlweise gegen einen ersten Ventilsitz oder gegen einen zweiten Ventilsitz geführt wird, wobei sich beide Ventilsitze gegenüberliegen, mit einer doppelt wirkenden Dichtung ausgestattet wird. Das bedeutet, dass man anstelle von zwei einzelnen Dichtungen den Abdichtkörper mit einer einzigen doppelwirkenden Dichtung versieht, die so ausgebildet ist, dass sie je nach Stellung des Abdichtkörpers jedes mal jeweils an dem Sitz, an dem dieser anliegt, abdichtet. D. h., wenn der Abdichtkörper gegen den ersten Ventilsitz geführt ist, dichtet die Dichtung gegenüber diesem ersten Ventilsitz ab und bei der Stellung, bei dem der Abdichtkörper an dem gegenüberliegenden Ventilsitz anliegt, dichtet die Dichtung auch an diesem Ventilsitz ab. Eine solche doppelt wirkende Dichtung kann beispielsweise eine am Abdichtkörper ringförmig umlaufende Dichtung mit einem vorzugsweise etwa T-förmigen Querschnitt sein. Ein oberer Teil einer solchen im Querschnitt etwa T-förmigen Dichtung wirkt an dem ersten Ventilsitz, ein unterer Teil der Dichtung wirkt bei Anlage als Abdichtung gegenüber dem zweiten Ventilsitz, während ein mittlerer Teil eine formschlüssige Verbindung zum Abdichtkörper herstellt, beispielsweise, indem die Dichtung in eine Ringnut des Abdichtkörpers eingreift.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Längsschnitt durch ein Ventil gemäß einer ersten Ausführungsform der Erfindung;
- Fig. 2: einen Längsschnitt durch einen Ventileinsatz gemäß einer zweiten Ausführungsvariante der Erfindung;
- Fig. 3: einen Längsschnitt durch ein Ventil gemäß einer weiteren Variante der Erfindung, welches als Zwei-Wege-Ventil ausgebildet ist;
- Fig. 4: ein Einbauschema einer Heizungs- und Warmwasseranlage unter Verwendung eines erfindungsgemäßen Ventils;
- Fig. 5: ein Einbauschema einer Heizungs- und Warmwasseranlage mit Verwendung eines erfindungsgemäßen Ventils in einer anderen Funktion.

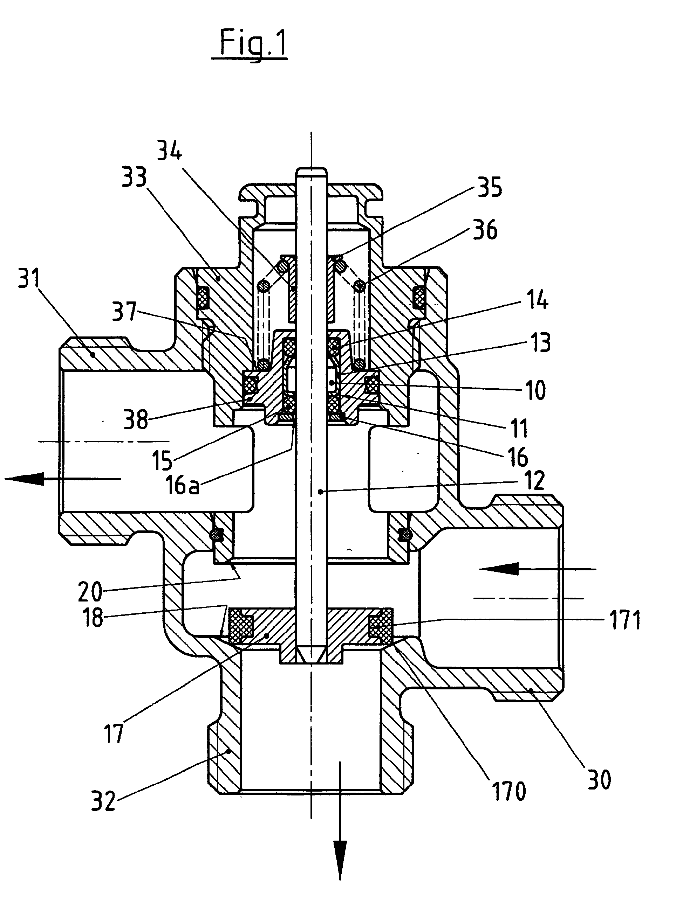

Zunächst wird auf Fig. 1 Bezug genommen. Die Darstellung zeigt im Längsschnitt ein erfindungsgemäßes Ventil, welches als Drei-Wege-Ventil ausgebildet ist. Wie man aus der Darstellung erkennt, ist am Ventilgehäuse ein erster Stutzen 30 ausgebildet, der beispielsweise als Eingangsstutzen für ein flüssiges Medium dient, welches in Pfeilrichtung einströmt. Das Drei-Wege-Ventil hat zwei Ausgangsstutzen, nämlich einen ersten Ausgangsstutzen 31, der ebenfalls radial abgeht, ebenso wie der Eingangsstutzen 30, der aber gegenüber dem Eingangsstutzen 30 axial versetzt angeordnet ist. Das Ventil hat weiterhin einen zweiten Ausgangsstutzen 32, der am Gehäuse in der Zeichnung in axialer Verlängerung der Ventilspindel 12 nach unten abgeht. Je nach Stellung der Ventilspindel 12, die am vorderen Ende einen Abdichtkörper 17 aufweist und der zwei einander gegenüberliegende Ventilsitze 18 bzw. 20 zugeordnet sind, kann das über den Eingangsstutzen 30 einströmende Wasser entweder über den Ausgangsstutzen 32 nach unten ausfließen oder aber über den Ausgangsstutzen 31 in der Zeichnung Figur 1 nach links. Steht die Ventilspindel 12 so wie dies in der Zeichnung dargestellt ist, dass der Abdichtkörper 17 auf dem unteren Ventilsitz 18 aufsitzt, dann ist der Weg frei für das Medium, welches bei dem Eingangsstutzen 30 einströmt, zum Ausströmen über den Ausgangsstutzen 31, wohingegen der nach unten abgehende Ausgangsstutzen 32 verschlossen ist. Wird dagegen die Ventilspindel axial über einen hier nicht dargestellten Antrieb in der Zeichnung nach oben bewegt, dann dichtet in der obersten Hubstellung der Abdichtkörper 17 auf dem zweiten Ventilsitz 20 ab, so dass die Verbindung zu dem Ausgangsstutzen 31 verschlossen ist, während das Medium über den nach unten abgehenden zweiten Ausgangsstutzen 32 abfließen kann. Man könnte die drei Ventilstutzen des Ventilgehäuses aber auch anders anschließen und z. B. so benutzen, dass der Ventilstutzen 31 als Eingangsstutzen dient und die Ventilstutzen 30, 32 als Ausgangsstutzen dienen oder aber zwei Ventilstutzen dienen als Eingangsstutzen und nur einer als Ausgangsstutzen.

Die erfindungsgemäße Vorrichtung zur Schmierung der Ventilspindel 12 bei deren axialem Hub wird nun nachfolgend weiter unter Bezugnahme auf Figur 1 näher erläutert. Wie man sieht ist eine Kammer 11 konzentrisch in den oberen Ventileinsatz 33 eingesetzt, wobei die Ventilspindel 12 wiederum diese Kammer 11 in axialer Richtung bei ihrer Hubbewegung durchsetzt. In die Kammer 11 eingesetzt ist ein oberer O-Ring 14, der die Ventilspindel 12 an ihrem Umfang umschließt sowie mit axialem Abstand davon ein unterer O-Ring 15, der ebenfalls den Schaft der Ventilspindel 12 umschließt. Zwischen den beiden O-Ringen 14, 15 befindet sich ein büchsenartiges, zylindrisches Behältnis 13, welches ein Schmiermittel 10, z. B. ein Fett aufnimmt. Wie man erkennen kann, steht das Schmiermittel 10 mit dem Umfang der Ventilspindel 12, die die Kammer 11 und das Behältnis 13 axial mittig durchsetzt, in Verbindung. Der Hub der Ventilspindel 12 bei ihrer Axialbewegung zwischen den beiden Stellungen auf den Ventilsitzen 18 bzw. 20 ist etwas geringer als der axiale Abstand der beiden O-Ringe 14, 15 zueinander. Dadurch bewegt sich die Ventilspindel 12 in dem das Behältnis 11 durchsetzenden Bereich und wird bei jedem Hubvorgang gefettet, wobei gleichzeitig durch die beiden O-Ringe 14, 15, die oberhalb bzw. unterhalb des Behältnisses 13 angeordnet sind, das Fett abgestreift und die O-Ringe ebenfalls gefettet und dadurch elastisch gehalten werden. Das Schmiermittel 10 verbleibt innerhalb des Behältnisses 13 bzw. in der Kammer 11. Außerdem kann das Medium, in der Regel Wasser, welches das Ventil z. B. von dem Eingangsstutzen 30 zum Ausgangsstutzen 31 durchfließt aufgrund der Abdichtung durch den O-Ring 15 nicht in die Kammer gelangen.

Unterhalb des unteren O-Rings 15 ist eine eingepresste Scheibe 16 angeordnet, durch die die Anordnung mit dem Behältnis 13 in der Kammer 11 gehalten wird. Diese eingepresste Scheibe 16 weist außerdem eine zentrische Bohrung 16a auf, durch die die Ventilspindel 12 hindurchgeht, wobei diese Bohrung 16a bewusst etwas größer dimensioniert ist als der Durchmesser der Ventilspindel, so dass die Bohrung 16a bzw. die eingepresste Scheibe 16 die Ventilspindel 12 mit einem radialen Abstand umgibt. Dieser radiale Abstand ist groß genug gewählt, dass verhindert wird, dass kleinste Schmutzpartikel, die mit dem durch das Ventil hindurchfließenden Medium mitgerissen werden, sich in der Bohrung 16a zwischen der Scheibe 16 und der Ventilspindel 12 festsetzen und diese so blockieren.

Der Antrieb der Ventilspindel 12 ist in Figur 1 nicht näher dargestellt. Hier können im Prinzip bekannte Antriebsmechanismen verwendet werden. Wie man sieht, ist innerhalb des Ventileinsatzes 33 auf die Ventilspindel 12 eine Hülse 34 aufgepresst, gegen deren oberen Bund 35 eine Druckfeder 36 anliegt, die ihr unteres Widerlager 37 auf der Oberseite des die Kammer 11 aufweisenden Einsatzteils 38 hat. Das Einsatzteil 38 ist außen gegen den Ventileinsatz 33 abgedichtet. Bei ihrer axialen Hubbewegung arbeitet die Ventilspindel 12 gegen die Kraft der Druckfeder 36, die in der in Figur 1 dargestellten Stellung, bei der sich die Ventilspindel 12 auf dem unteren Ventilsitz 18 befindet, gespannt ist.

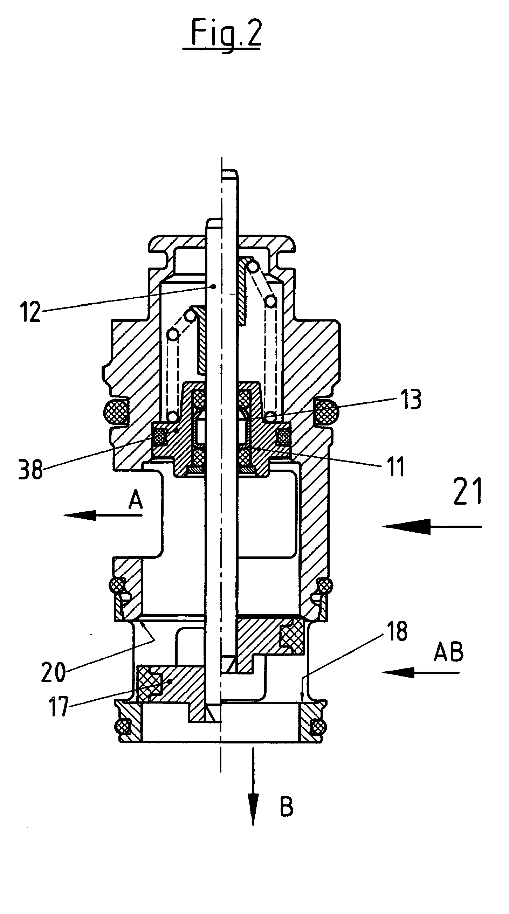

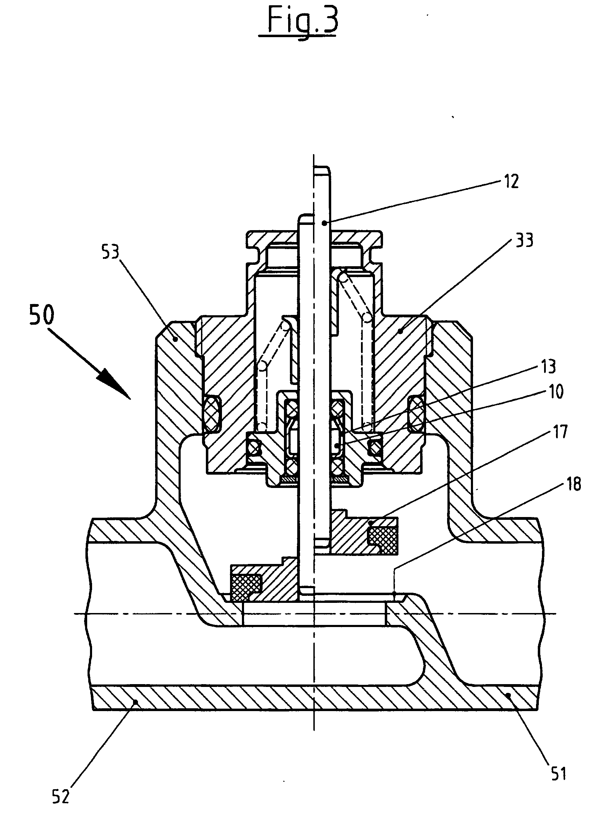

Nachfolgend wird unter Bezugnahme auf Figur 2 eine zweite etwas abgewandelte Variante der Erfindung beschrieben. In diesem Fall ist ein Ventileinsatz 21 vorgesehen, der entsprechende Durchbrüche aufweist, so dass beim Einsatz in einen hier nicht dargestellten Gehäusekörper ein Drei-Wege-Ventil ausgebildet wird. Dieser Ventileinsatz 21 hat einen doppelten Ventilsitz mit dem ersten unteren Ventilsitz 18 und dem oberen Ventilsitz 20, so dass die Funktion ähnlich ist wie bei dem zuvor beschriebenen Ausführungsbeispiel. Der Abdichtkörper 17 ist in Figur 2 in den beiden extremen Stellungen dargestellt, bei dem er in der linken Hälfte auf dem unteren Ventilsitz 18 und in der rechten Hälfte der Zeichnung auf dem oberen Ventilsitz 20 sitzt. Die Ventilspindel 12 durchsetzt wiederum eine in einem Einsatzteil 38 ausgebildete Kammer 11, in die das Behältnis 13 eingesetzt ist, welches das Schmiermittel aufnimmt. Die beiden O-Ringe sind ebenfalls vorhanden. Im übrigen ist die Funktion ähnlich wie bei dem zuvor beschriebenen Ausführungsbeispiel. Der Unterschied liegt im wesentlichen darin, dass es sich um einen Ventileinsatz 21 handelt. Dabei kann dieser beispielsweise so verwendet werden, dass das Medium bei dem Pfeil AB einströmt und wahlweise je nach Stellung des Abdichtkörpers 17 entweder in radialer Richtung mit axialem Versatz bei dem Pfeil A ausströmt oder aber in rechtwinklig umgelenkter Strömungsrichtung axial entsprechend dem Pfeil B den Ventileinsatz verlässt. Nachfolgend wird unter Bezugnahme auf Figur 3 eine weitere alternative Ausführungsvariante der Erfindung näher beschrieben. In diesem Fall ist ein Ventilgehäuse 50 vorhanden, welches ein Zwei-Wege-Ventil aufnimmt. An dem Gehäuse befindet sich ein erster radialer Stutzen ***51*** rechts in der Zeichnung, der beispielsweise als Eingangsstutzen benutzt werden kann und ein zweiter radialer Stutzen 52 links in der Zeichnung, der beispielsweise als Ausgangsstutzen verwendet werden kann. Das Ventil kann grundsätzlich auch in umgekehrter Richtung durchströmt werden. Wie man sieht, ist wiederum eine Ventilspindel 12 vorhanden, mit einem Abdichtkörper 17, der jedoch nur gegen einen ersten einfachen Ventilsitz 18 geführt ist. Der Gehäusekörper des Ventils ist entsprechend einfacher aufgebaut, da es sich um ein Zwei-Wege-Ventil handelt. In einen dritten Stutzen 53 des Gehäusekörpers ist wieder ein Einsatz 33 eingeschraubt, in dem die Ventilspindel 12 zentrisch geführt ist. Dabei wird die Ventilspindel durch das Schmiermittel 10 in dem Behältnis 13 ähnlich wie in den zuvor beschriebenen Ausführungsbeispielen bei ihrer Hubbewegung geführt.

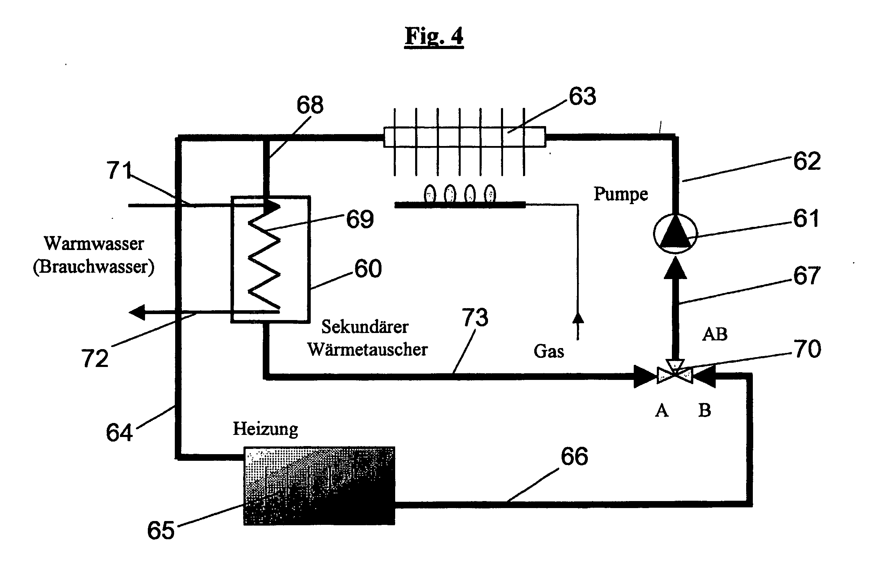

Nachfolgend wird nun auf Figur 4 Bezug genommen und anhand dieser ein erstes Anwendungsbeispiel für die Verwendung eines erfindungsgemäßen Ventils beschrieben. Die Zeichnung zeigt ein Einbauschema betreffend eine Heizungs- und Warmwasseranlage mit einem sogenannten sekundären Wärmetauscher 60. Das von der Pumpe 61 durch die Leitung 62 geförderte Wasser wird durch den Brenner 63 erwärmt. Das Warmwasser gelangt über ein sich verzweigendes Leitungssystem umfassend einerseits eine Heizungsvorlaufleitung 64 zu den Heizkörpern einer Heizungsanlage. Das abgekühlte Wasser verlässt den Heizkörper 65 über die Rücklaufleitung 66 und gelangt zu einem Drei-Wege-Ventil 70 der erfindungsgemäßen Art. Das Drei-Wege-Ventil 70 ist hier als Mischventil geschaltet und wird von der Heizungsrücklaufleitung 66 zunächst bei B angeströmt. Es kann sich um ein ähnliches Ventil handeln wie dies in Figur 1 dargestellt ist, mit dem Unterschied, dass bei der Anwendung gemäß Figur 4 zwei der Stutzen des Ventilgehäuses als Eingangsstutzen und nur einer als Ausgangsstutzen verwendet wird. Wenn das Ventil so geschaltet ist, dass der zweite Eingangsstutzen A geschlossen ist, dann gelangt das Wasser über den Eingangsstutzen B in den Ausgangsstutzen AB und strömt von dort über die Leitung 67 zur Pumpe 61, um dann wieder zum Brenner 63 gefördert zu werden. Hinter dem Brenner 63 geht eine Zweigleitung 68 ab zu einem sekundären Wärmetauscher 69, der sich innerhalb des sekundären Wärmetauschers 60 befindet. Dabei gelangt kaltes Wasser eines Brauchwassersystems über die Leitung 71 in den Wärmetauscher und wird dort von dem warmen den sekundären Wärmetauscher 60 durchströmenden Wasser erwärmt, welches sich dabei gleichzeitig abkühlt. Das erwärmte Wasser verlässt dann über die Leitung 72 den Wärmetauscher und kann als warmes Brauchwasser eingesetzt werden. Das abgekühlte Wasser tritt aus dem sekundären Wärmetauscher 60 aus und gelangt über die Leitung 73 zu dem Drei-Wege-Ventil 70. Wenn der Eingang A des Drei-Wege-Ventils geöffnet ist und der Eingang B geschlossen ist, dann gelangt das abgekühlte Wasser aus der Leitung 73 über das Drei-Wege-Ventil und dessen Ausgang AB wieder in die Leitung 67 und wird über die Pumpe 61 zum Brenner 63 gefördert. Wird das Drei-Wege-Ventil 70 dagegen umgeschaltet, dann ist der Eingang A geschlossen und der Eingang B geöffnet und es wird nur Wasser aus der Rücklaufleitung 66 des Heizungssystems über die Pumpe 61 zum Brenner 63 gefördert. Mittels des erfindungsgemäßen Umschaltventils 70 kann man also wahlweise Wasser entweder durch das Heizungssystem im Kreislauf fördern und erwärmen oder Wasser durch den sekundären Wärmetauscher 60 leiten, um dadurch Brauchwasser zu erwärmen.

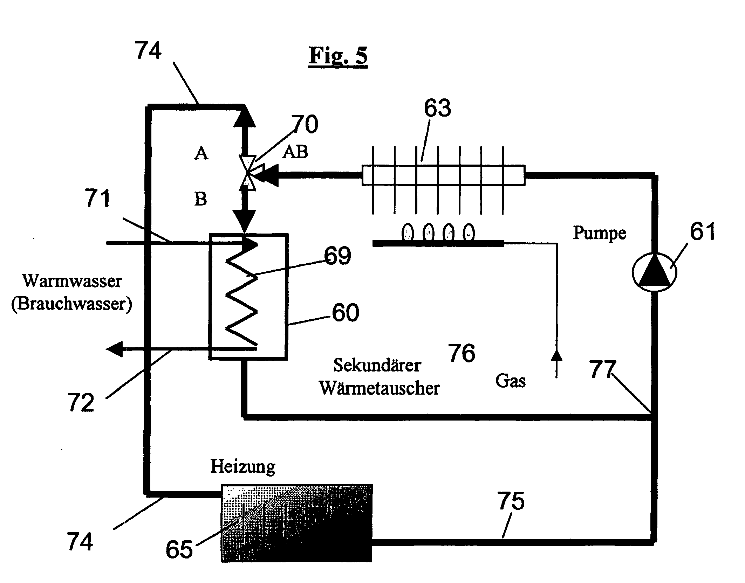

Figur 5 zeigt ein weiteres Anwendungsbeispiel für einen möglichen Einsatz eines erfindungsgemäßen Ventils, welches wiederum als Drei-Wege-Ventil ausgebildet ist und in der Zeichnung mit dem Bezugszeichen 70 bezeichnet ist. In diesem Fall ist das erfindungsgemäße Drei-Wege-Ventil ein Umschaltventil, welches als Verteilventil geschaltet ist. Das durch den Brenner 63 erwärmte Wasser gelangt über den Eingang AB zum Drei-Wege-Ventil, welches hier mit nur einem Eingangs- aber zwei Ausgangsstutzen arbeitet.
Dies entspricht im Prinzip der oben bei der Beschreibung von Figur 1 erläuterten Variante. Wenn der Ausgangsstutzen B verschlossen ist, dann gelangt das Warmwasser über den Ausgangsstutzen A und die Vorlaufleitung 74 zum Heizkörper 65. Das abgekühlte Wasser verlässt über die Rücklaufleitung 75 den Heizkörper 65 und wird über die Pumpe 61 erneut zum Brenner 63 gefördert und dort erwärmt.

Nun kann man das Ventil 70 umschalten, so dass der erste Ausgangsstutzen A verschlossen ist und der zweite Ausgangsstutzen B geöffnet wird. Dann strömt das erwärmte Wasser bei B aus dem Umschaltventil 70 und gelangt in einen sekundären Wärmetauscher 60, durch den eine Leitungsschleife eines Wärmetauschers 69 hindurchgeführt ist. Ähnlich wie bei dem zuvor beschriebenen Ausführungsbeispiel kann man kaltes Brauchwasser über die Leitung 71 durch den Wärmetauscher 69 leiten, welches dann als warmes Brauchwasser über die Leitung 72 den Wärmetauscher verlässt. Dabei kühlt sich das Wasser, welches den sekundären Wärmetauscher 60 durchströmt, ab und verlässt diesen über die Kaltwasserleitung 76. Dieses abgekühlte Wasser strömt über den Abzweig 77 erneut zur Pumpe 61 und wird mittels des Brenners 63 wieder erwärmt. Somit kann man je nach Einstellung des Ventils 70 das warme Wasser entweder über den Ausgang B durch den Kreislauf des sekundären Wärmetauschers 60, 76, 77 zur Pumpe 61 fördern oder aber wahlweise das warme Wasser durch den Ausgang A über die Vorlaufleitung 74 zu einem System mit Heizkörpern 65 fördern. Bei der Anwendung gemäß Figur 5, bei der das erfindungsgemäße Ventil 70 als Verteilventil geschaltet ist, hat dieses also einen Warmwassereingang und zwei Warmwasserausgänge, die wahlweise geschaltet werden können. Dagegen hat bei dem Anwendungsbeispiel gemäß Figur 4 das erfindungsgemäße Ventil 70 zwei Kaltwassereingänge und einen Kaltwasserausgang, so dass es als Mischventil für verschiedene Kaltwasserströme geschaltet ist.

Figur 1 zeigt einen Abdichtkörper 17, der gemäß einer bevorzugten Variante der Erfindung mit einer doppelt wirkenden Dichtung 170 versehen ist. Wie man sieht, hat die doppelt wirkende Dichtung 170 einen oberen Abschnitt, der bei Anlage an dem oberen Ventilsitz 20 gegenüber diesem abdichtet und einen unteren Abschnitt, der bei Anlage an dem unteren Ventilsitz 18 gegenüber diesem abdichtet. Die doppelt wirkende Dichtung 170 ist eine ringförmige Dichtung mit einem etwa T-förmigen Querschnitt (liegendes T), wobei ein mittlerer Abschnitt der Dichtung in eine Ringnut 171 des Abdichtkörpers 17 eingreift.

## Patentansprüche

1. Ventil für flüssige Medien mit einer über einen Antrieb betätigbaren in axialer Richtung in mindestens einer Führung beweglich geführten Ventilspindel (12), wobei die Ventilspindel (12) eine in einem Einsatzteil (38) ausgebildete Kammer (11) durchsetzt, durch die die Ventilspindel (12) bei ihrer axialen Hubbewegung hindurchgeführt ist, die Führung diese Kammer (11) umfaßt und die Kammer (11) ein Schmiermittel (10) enthält, und wenigstens ein in die Kammer (11) eingesetztes separates hülsenartiges Behältnis (13) vorgesehen ist, das das Schmiermittel (10) enthält
**dadurch gekennzeichnet,**
**dass** an der dem Medium zugewandten Seite der Kammer (11) diese durch eine in das Einsatzteil (38) eingepresste Scheibe (16) im wesentlichen verschlossen ist.

2. Ventil nach Anspruch 1, **dadurch gekennzeichnet, dass** sich an dem das Schmiermittel (10) enthaltenden Behältnis (13) in axialer Richtung wenigstens ein die Kammer (11) nach außen hin abdichtender O-Ring (14) befindet.

3. Ventil nach einem der Ansprüche 1 oder 2, **dadurch gekennzeichnet, dass** in axialer Richtung vor dem Schmiermittel (10) und/oder auch hinter dem Schmiermittel jeweils ein am Umfang der Ventilspindel (12) abdichtender O-Ring (14, 15) angeordnet ist.

4. Ventil nach einem der Ansprüche 1 bis 3, **dadurch gekennzeichnet, dass** das Schmiermittel (10) im Führungsbereich der Ventilspindel (12) an der dem das Ventil durchfließenden Medium abgewandten Seite in einem gegen das Medium abgedichteten Bereich vorgesehen ist.

5. Ventil nach einem der Ansprüche 1 bis 4, **dadurch gekennzeichnet, dass** die eingepresste Scheibe (16) eine Bohrung (16a) aufweist für den Durchgang der Ventilspindel (12), wobei die Bohrung (16a) die Ventilspindel mit radialem Abstand umgibt.

6. Ventil nach einem der Ansprüche 1 bis 5, **dadurch gekennzeichnet, dass** dieses ein Dreiwegeventil, vorzugsweise ein Heizungsventil oder ein Ventil für eine Kühlanlage ist.

7. Ventil nach einem der Ansprüche 1 bis 6, **dadurch gekennzeichnet, dass** dieses ein Zweiwegeventil, vorzugsweise ein Heizungsventil oder ein Ventil für eine Kühlanlage ist.

8. Ventil nach einem der Ansprüche 1 bis 7, **dadurch gekennzeichnet, dass** dieses als Mischventil oder Verteilventil im Rohrleitungssystem einer Heizungs- und/oder Warmwasseranlage und/oder einer Kühlanlage eingesetzt ist.

## Claims

1. Valve for liquid media, having a valve stem (12) which can be actuated by means of a drive mechanism and is guided movably in the axial direction in at least one guide, wherein the valve stem (12) passes through a chamber (11) configured in an insert (38), through which chamber the valve stem (12) is guided in its axial lifting motion, the guide encompasses this chamber (11), and the chamber (11) contains a lubricant (10), and at least one separate sleeve-like reservoir (13) inserted in the chamber (11) is provided, which contains the lubricant (10), **characterized in that** on the medium-facing side of the chamber (11) the latter is essentially closed off by a disc (16) pressed into the insert (38).

2. Valve according to Claim 1, **characterized in that** on the reservoir (13) containing the lubricant (10) there is located in the axial direction at least one 0-ring (14), which seals the chamber (11) in the outward direction.

3. Valve according to one of Claims 1 or 2,
**characterized in that** before the lubricant (10) and/or also behind the lubricant in the axial direction there is respectively disposed an 0-ring (14, 15), which forms a seal on the periphery of the valve stem (12).

4. Valve according to one of Claims 1 to 3,
**characterized in that** the lubricant (10) in the guide region of the valve stem (12) is provided on the side which faces away from the medium flowing through the valve, in a region sealed off against the medium.

5. Valve according to one of Claims 1 to 4,
**characterized in that** the pressed-in disc (16) has a bore (16a) for the passage of the valve stem (12), the bore (16a) surrounding the valve stem with a radial clearance.

6. Valve according to one of Claims 1 to 5, **characterized in that** this is a three-way valve, preferably a heating valve or a valve for a cooling system.

7. Valve according to one of Claims 1 to 6, **characterized in that** this is a two-way valve, preferably a heating valve or a valve for a cooling system.

8. Valve according to one of Claims 1 to 7,
**characterized in that** this is used as a mixing valve or distributing valve in the piping system of a heating and/or hot water system and/or a cooling system.

## Revendications

1. Soupape pour fluides comprenant une tige de soupape (12) pouvant être actionnée par le biais d'un entraînement et guidée de manière déplaçable dans la direction axiale dans au moins un guide, la tige de soupape (12) traversant une chambre (11) réalisée dans une pièce d'insertion (38), à travers laquelle la tige de soupape (12) est guidée lors de son mouvement de levée axial, le guide comprenant cette chambre (11) et la chambre (11) contenant un lubrifiant (10), et au moins un récipient séparé de type douille (13) inséré dans la chambre (11) étant prévu, lequel contient le lubrifiant (10),
**caractérisée en ce que**
du côté de la chambre (11) tourné vers le fluide, celle-ci est substantiellement fermée par une rondelle (16) pressée dans la pièce d'insertion (38).

2. Soupape selon la revendication 1, **caractérisée en ce que** dans la direction axiale, au moins un joint torique (14) isolant hermétiquement la chambre (11) par rapport à l'extérieur se trouve sur le récipient (13) contenant le lubrifiant (10).

3. Soupape selon l'une quelconque des revendications 1 ou 2, **caractérisée en ce que** dans la direction axiale avant le lubrifiant (10) et/ou aussi derrière le lubrifiant, est disposé un joint torique (14, 15) réalisant l'étanchéité à chaque fois au niveau de la périphérie de la tige de soupape (12).

4. Soupape selon l'une quelconque des revendications 1 à 3, **caractérisée en ce que** le lubrifiant (10) est prévu dans une région rendue étanche vis-à-vis du fluide, dans la région de guidage de la tige de soupape (12) du côté opposé au fluide traversant la soupape.

5. Soupape selon l'une quelconque des revendications 1 à 4, **caractérisée en ce que** la rondelle pressée (16) présente un alésage (16a) pour le passage de la tige de soupape (12), l'alésage (16a) entourant la tige de soupape avec un espacement radial.

6. Soupape selon l'une quelconque des revendications 1 à 5, **caractérisée en ce que** celle-ci est une soupape à trois voies, de préférence une soupape de chauffage ou une soupape pour une installation de refroidissement.

7. Soupape selon l'une quelconque des revendications 1 à 6, **caractérisée en ce que** celle-ci est une soupape à deux voies, de préférence une soupape de chauffage ou une soupape pour une installation de refroidissement.

8. Soupape selon l'une quelconque des revendications 1 à 7, **caractérisée en ce que** celle-ci est utilisée comme soupape de mélange ou soupape de distribution dans le système de conduite tubulaire d'une installation de chauffage et/ou d'eau chaude et/ou d'une installation de refroidissement.
